# EUROPEAN PATENT APPLICATION

(11) **EP 4 606 772 A1**
(43) Date of publication of application: **27.08.2025**
(21) Application number: 23879974.6
(22) Date of filing: 08.08.2023
(51) Int. Cl.: C01G 39/00

(54) **HIGH-PURITY MOLYBDENUM DICHLORIDE DIOXIDE AND PREPARATION METHOD THEREFOR**

(30) Priority: 20.10.2022 KR 20220135432
(71) Applicant: SK Specialty Co., Ltd., Yeongju-si, Gyeongsangbuk-do, 36059 (KR)
(72) Inventor: HONG, Chang Sung, Sejong 30068 (KR); KIM, Dong Su, Sejong 30068 (KR); OH, Tae Hoon, Sejong 30068 (KR); KIM, Sung Ryong, Sejong 30068 (KR); LEE, Sang Kyung, Sejong 30068 (KR); SEO, Hyun Bum, Sejong 30068 (KR); MOON, Yong Seop, Sejong 30068 (KR); IN, Dong Jin, Sejong 30068 (KR)
(74) Representative: dompatent von Kreisler Selting Werner - Partnerschaft von Patent- und Rechtsanwälten mbB
(86) International application number: PCT/KR2023/011643
(87) International publication number: WO 2024/085391

(57) **Abstract**

The present invention relates to high-purity molybdenum dichloride dioxide and a preparation method therefor. In the molybdenum dichloride dioxide, the amount of silicon (Si) in the impurities is 400 wt ppm or less. High-purity molybdenum dichloride dioxide can be obtained due to a preparation process that includes sublimation purification.

## Description

### Technical Field

The present disclosure relates generally to high-purity molybdenum dichloride dioxide (MoO₂Cl₂) and a preparation method therefor. More particularly, the present disclosure relates to high-purity molybdenum dichloride dioxide made suitable for use as a precursor for forming a thin film by removing impurities that increase resistivity, and to a preparation method therefor.

### Background Art

Molybdenum dichloride dioxide (MoO₂Cl₂), which can be used as a precursor for forming molybdenum-containing thin films, needs to be produced as a high-purity compound in order to form high-quality thin films.

Korean Patent No. 10-2368870 and Korean Patent Application Publication No. 10-2020-0127226 describe examples of such high-purity molybdenum dichloride dioxide.

In Korean Patent Application Publication No. 10-2020-0127226, high-purity molybdenum oxychloride is disclosed. In Korean Patent No. 10-2368870, high-purity molybdenum oxychloride is disclosed, and molybdenum dichloride dioxide is mentioned as an example of the molybdenum oxychloride. Additionally, high-purity molybdenum oxychloride is disclosed in International Patent No. WO/2021/171742.

In the above related art documents, the purity of a compound is evaluated by analyzing the contents of Be, Mg, Al, Ga, Ge, As, Sr, Ba, W, Ti, U, Ag, Na, Co, Fe, In, Mn, Ni, Pb, Zn, Cu, Cr, Tl, Li, Th, Sc, Se, Hf, Ta, and Bi using ICP-MS, analyzing the content of K using AAS, and calculating the purity from the resulting values.

Based on the disclosed contents of the related art documents, the applicant studied the performance of molybdenum dichloride dioxide as a precursor for forming a thin film, and demonstrated that an impurity such as silicon (Si), which was not mentioned in the related art documents, exists among various impurities. In particular, it was found that when silicon is included above a predetermined level, it can cause an increase in the resistivity of a formed thin film, and also cause problems in the process of forming a high-quality molybdenum-containing thin film.

This thus indicates that it is advantageous to form a high-quality molybdenum-containing thin film only when high-purity molybdenum dichloride dioxide from which impurities that may cause problems are removed is used as a precursor for forming a thin film.

### Disclosure

### Technical Problem

Accordingly, the present disclosure has been made keeping in mind the above problems occurring in the related art, and an objective of the present disclosure is to provide a molybdenum dichloride dioxide (MoO₂Cl₂) purified to a high purity by reducing the content of impurities that may deteriorate the properties of a thin film, and provide a preparation method therefor.

### Technical Solution

In order to accomplish the above objective, the present disclosure provides high-purity molybdenum dichloride dioxide, including: silicon (Si) in a content of equal to or less than 400 wt ppm among impurities.

At this time, the impurities may contain the silicon (Si) in a content equal to or greater than 99 wt%.

Additionally, in an embodiment, the impurities may contain less than 2 weight ppm of remaining impurity components other than the silicon (Si). In another embodiment, the impurities may contain less than 0.1 weight ppm of remaining impurity components other than the silicon (Si).

Additionally, the impurities may include silicon (Si), silver (Ag), aluminum (Al), arsenic (As), gold (Au), barium (Ba), calcium (Ca), cadmium (Cd), cobalt (Co), chromium (Cr), copper (Cu), iron (Fe), potassium (K), lithium (Li), magnesium (Mg), manganese (Mn), sodium (Na), nickel (Ni), lead (Pb), antimony (Sb), tin (Sn), titanium (Ti), vanadium (V), tungsten (W), zinc (Zn), and zirconium (Zr).

Additionally, in an embodiment, the molybdenum dichloride dioxide may contain hydrate in a content of less than 1.5 wt%. In another embodiment, the molybdenum dichloride dioxide may contain hydrate in a content of less than 1 wt%.

Additionally, the high-purity molybdenum dichloride dioxide may be prepared by a preparation method including subjecting molybdenum dichloride dioxide to a sublimation purification process.

### Advantageous Effects

Molybdenum dichloride dioxide according to the present disclosure is a high-purity compound and thus has the effect of reducing the content of impurities that may deteriorate the properties of a formed thin film when applied as a precursor in a thin film formation process.

### Mode for Invention

Hereinafter, the present disclosure will be described in more detail. All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Generally, molybdenum dichloride dioxide (MoO₂Cl₂) contains trace contents of impurities such as silicon (Si), silver (Ag), aluminum (Al), arsenic (As), gold (Au), barium (Ba), calcium (Ca), cadmium (Cd), cobalt (Co), chromium (Cr), copper (Cu), iron (Fe), potassium (K), lithium (Li), magnesium (Mg), manganese (Mn), sodium (Na), nickel (Ni), lead (Pb), antimony (Sb), tin (Sn), titanium (Ti), vanadium (V), tungsten (W), zinc (Zn), and zirconium (Zr). Additionally, due to its high hygroscopicity, the molybdenum dichloride dioxide can absorb moisture from air to form hydrates.

When using the molybdenum dichloride dioxide as a precursor for a thin film formation process, it is important to reduce the moisture content of a raw material itself as well as prevent contact with air during the process.

Even when the above moisture problem is solved, another problem may occur in the thin film formation process, namely, deterioration of thin film properties due to the presence of impurities. In an effort to address this, some conventional technologies use high-purity molybdenum oxychloride compounds.

However, when molybdenum dichloride dioxide among the molybdenum oxychloride compounds was used in an actual process, the problem of increasing the resistivity of a formed thin film occurred. This was found to be due to the influence of silicon (Si), which is one of the impurities contained in the molybdenum dichloride dioxide.

Accordingly, in the present disclosure, the problem of deterioration of thin film properties is solved by using molybdenum dichloride dioxide, which has a silicon content of equal to or less than 400 wt ppm among impurities, as a precursor for forming a thin film. When the content of silicon among the impurities is equal to or less than 400 wt ppm, the problem of increasing the resistivity of the formed thin film is solved, making it possible to form a high-quality molybdenum-containing thin film.

The content of the impurities may be defined as a value subtracted from 100 wt% of the total content of elements measured as a content exceeding a detection limit. Specifically, the content of silicon may be measured using inductively coupled plasma optical emission spectroscopy (ICP-OES), and the contents of other impurity components excluding the silicon may be measured using inductively coupled plasma mass spectrometry (ICP-MS). The resulting values calculated using the above measurement methods are used as criteria for determining the purity of the molybdenum dichloride dioxide.

The molybdenum dichloride dioxide may be produced by reacting sodium molybdate (Na₂MoO₄) and thionyl chloride (SOCl₂).

Specifically, the sodium molybdate and the thionyl chloride may be reacted through a step-1 reaction. The reaction may be performed at room temperature and under reflux conditions, thereby obtaining high-purity molybdenum dichloride dioxide without side reactions.

In the above synthesis method may be performed in the following manner. Sodium molybdate and thionyl chloride react to form NaMoO₄-SOCl. Then, as SO₂ is removed, sodium molybdenum oxychloride (NaMoO₃Cl) is formed as an intermediate. The sodium molybdenum oxychloride reacts again with the thionyl chloride, forming MoO₃Cl-SOCl. Finally, molybdenum dichloride dioxide (MoO₂Cl₂) is obtained.

Additionally, the above reaction may be performed in the presence of a reaction solvent. As the reaction solvent, a solvent selected from C₅-C₁₀ linear, branched, or cyclic saturated or unsaturated hydrocarbons and alkyl halides (RHₐX₍₄₋ₐ₎ (X = Cl, Br, or I)) may be used. An example of the hydrocarbons may include hexane, cyclohexane, octane, or decane. An example of the alkyl halides may include dichloromethane, chloroform, or carbon tetrachloride.

Additionally, molybdenum dichloride dioxide may be obtained by a 2-stage synthesis method in which molybdenum tetrachloride oxide (MoOCl₄) is formed and then molybdenum dichloride dioxide (MoO₂Cl₂) is formed using MoOCl₄ as a raw material.

In the above reaction, molybdenum oxide (MoO₃) is used as a raw material in a step-1 reaction. After reacting the molybdenum oxide and thionyl chloride (SOCl₂), unreacted components are removed and molybdenum tetrachloride oxide is obtained through sublimation purification. Next, in a step-2 reaction, the obtained molybdenum tetrachloride oxide is mixed with a reaction solvent, and hexamethyldisiloxane (HMDSO) is added dropwise and reacted. Upon completion of the reaction, the reaction product is filtered and washed to obtain molybdenum dichloride dioxide.

The molybdenum dichloride dioxide thus obtained through the above synthesis method is subjected to sublimation purification. Through this process, high-purity molybdenum dichloride dioxide is obtained.

In the sublimation purification process, the molybdenum dichloride dioxide is placed into a sublimation purifier, sublimated by heating to a temperature at which a raw material sublimates, and re-agglomerated.

Hereinafter, the effects of the present disclosure will be described through examples.

### [Synthesis Example 1]

MoOCl₄ was synthesized in a step-1 reaction.

MoO₃ was placed in a reaction vessel and the reaction vessel was purged with N₂ gas. Next, 25 equivalents of SOCl were added, heated to reflux, and reacted. As the reaction progressed, the reaction solution in a suspension state turned dark red and all MoO₃ was consumed. After 8 hours, the reaction was terminated and the reaction solution was cooled to room temperature. Then, the reaction solution was filtered to remove unreacted MoO₃, and the filtrate was concentrated under reduced pressure to remove residual SOCl₂. Upon completion of the concentration under reduced pressure, a dark green solid (MoOCl₄ crude) was obtained. The obtained MoOCl₄ was purified through sublimation purification to obtain high-purity MoOCl₄.

Next, MoO₂Cl₂ was synthesized in a step-2 reaction.

MoOCl₄ was placed in a reaction vessel and the reaction vessel was purged with N₂ gas. 7 vol% of DCM, which was a reaction solvent, was added, followed by stirring at room temperature. After the reaction solution turned dark red, 1 equivalent of HMDSO was gradually added dropwise. When HMDSO was added dropwise, a brown solid was slowly formed, and upon completion of the addition, it changed into a brown suspension. The reaction product was reacted at room temperature for 12 hours. After the reaction was terminated, the solid was filtered and washed with DCM, which was the reaction solvent, until the filtrate became clear. The filtered solid was dried under vacuum to obtain MoO₂Cl₂ crude.

### [Synthesis Example 2]

Na₂MoO₄ was placed in a reaction vessel and the reaction vessel was purged with N₂ gas. 22 equivalents of SOCl and 7.5 vol% of DCM were added thereto, heated to reflux, and reacted. After 6 hours, the reaction was terminated and the reaction solution was cooled to room temperature. A solid thus obtained was filtered and washed with DCM, which was reaction solvent, until the filtrate became clear. The filtered and washed solid was dried under vacuum to obtain MoO₂Cl₂ crude.

### [Example 1]

MoO₂Cl₂ obtained through Synthesis Example 1 was subjected to sublimation purification using a sublimation purifier under the following conditions.

MoO₂Cl₂ was held in a raw material holding vessel of the sublimation purifier and the heating temperature was maintained at 151°C at which a raw material was stably sublimated. In this state, the sublimated and re-agglomerated MoO₂Cl₂ was precipitated toward a recovery part of the sublimation purifier. During the re-agglomeration process, the temperature of the recovery part was 50°C and the vacuum level was maintained at 6.5 Torr.

### [Example 2]

MoO₂Cl₂ obtained through Synthesis Example 2 subjected to sublimation purification using a sublimation purifier under the following conditions.

MoO₂Cl₂ was held in a raw material holding vessel of the sublimation purifier and the heating temperature was maintained at 151°C at which a raw material was stably sublimated. In this state, the sublimated and re-agglomerated MoO₂Cl₂ was precipitated toward a recovery part of the sublimation purifier. During the re-agglomeration process, the temperature of the recovery part was 50°C and the vacuum level was maintained at 6.5 Torr.

### [Example 3]

MoO₂Cl₂ obtained through Example 2 subjected to sublimation purification using a sublimation purifier under the following conditions.

MoO₂Cl₂ was held in a raw material holding vessel of the sublimation purifier and the heating temperature was maintained at 151°C at which a raw material was stably sublimated. In this state, the sublimated and re-agglomerated MoO₂Cl₂ was precipitated toward a recovery part of the sublimation purifier. During the re-agglomeration process, the temperature of the recovery part was 50°C and the vacuum level was maintained at 6.5 Torr.

### [Analysis of Impurity content]

The contents of impurities in molybdenum dichloride dioxide obtained in Synthesis Examples 1 to 2 and Examples 1 to 3 were measured. The content of silicon among the impurities was measured using ICP-OES, and the contents of the remaining impurities excluding silicon was measured using ICP-MS. The results are illustrated in Table 1. In Table 1, the unit of the content of silicon is ppm and the unit of the contents of the remaining impurities is ppb.

**[TABLE 1]**

| Element | Synthesis Example 1 | Synthesis Example 2 | Example 1 | Example 2 | Example 3 |
|---|---|---|---|---|---|
| Si | 7, 681 | 768 | 373 | 339 | 260 |
| Ag | 0.3 | 0.3 | 0.3 | 0.3 | 0.3 |
| Al | 4.4 | 6.4 | 2.5 | 2.5 | 2.5 |
| As | 0.8 | 6.2 | 0.8 | 0.8 | 0.8 |
| Au | 2.4 | 0.1 | 1.5 | 0.1 | 0.1 |
| Ba | 0.7 | 0.5 | 0.3 | 0.3 | 0.2 |
| Ca | 9.2 | 8.5 | 4.4 | 2.9 | 2.7 |
| Cd | 0.1 | 0.1 | 0.1 | 0.1 | 0.1 |
| Co | 0.2 | 0.1 | 0.1 | 0.1 | 0.1 |
| Cr | 0.9 | 0.8 | 0.6 | 0.2 | 0.2 |
| Cu | 0.5 | 0.3 | 0.4 | 0.3 | 0.3 |
| Fe | 7.5 | 3.3 | 0.9 | 0.5 | 0.5 |
| K | 8.9 | 36.5 | 2.7 | 2.9 | 2.5 |
| Li | 0.1 | 0.9 | 0.1 | 0.1 | 0.1 |
| Mg | 2.0 | 2.8 | 2.0 | 1.3 | 1.3 |
| Mn | 1.8 | 1.1 | 1.7 | 1.1 | 1.1 |
| Na | 35.3 | 15966.2 | 6.3 | 16.0 | 9.3 |
| Ni | 0.7 | 0.4 | 0.4 | 0.4 | 0.4 |
| Pb | 0.3 | 0.2 | 0.1 | 0.2 | 0.2 |
| Sb | 0.1 | 0.3 | 0.1 | 0.2 | 0.2 |
| Sn | 0.1 | 44.2 | 0.1 | 0.1 | 0.1 |
| Ti | 2.3 | 3.4 | 2.3 | 2.3 | 2.3 |
| V | 0.1 | 32.2 | 0.1 | 0.5 | 0.2 |
| W | 3116.0 | 118.5 | 1671.1 | 37.6 | 34.4 |
| Zn | 0.9 | 1.3 | 0.9 | 0.9 | 0.9 |
| Zr | 0.9 | 1.2 | 0.7 | 0.6 | 0.4 |

From the results in Table 1, it is shown that silicon accounts for a large portion of the impurities contained in MoO₂Cl₂. Furthermore, the content of sodium among the impurities other than silicon is relatively high because NaCl is produced as a by-product during the synthesis process.

Additionally, the contents of MoO₂Cl₂ and hydrate were quantitatively analyzed using XRD analysis results, and the results are illustrated in Table 2. Quantitative analysis uses relative values calculated from peak areas. The units are all weight percent (wt%).

**[TABLE 2]**

| Component | Synthesis Example 1 | Synthesis Example 2 | Example 1 | Example 2 | Example 3 |
|---|---|---|---|---|---|
| MoO₂Cl₂ | 91.85 | 96.9 | 98.69 | 99.37 | 99.46 |
| MoO₂Cl₂*H₂O | 8.15 | 6.23 | 1.31 | 0.63 | 0.54 |
| MoOCl₄ | - | - | - | - | - |
| MoCl₅ | - | - | - | - | - |

From the analysis results in Table 1 and Table 2, it is shown that molybdenum dichloride dioxide of Examples 1 to 3 has a silicon (Si) content of equal to or less than 400 wt ppm among the impurities, indicating that it is a high-purity compound with a low silicon content. It is also found that it contains hydrate in a content of equal to or less than 1.5 wt%, indicating that it is a high-purity molybdenum dichloride dioxide containing almost no hydrate.

While the present disclosure has been described with reference to exemplary embodiments thereof, it will be understood by those skilled in the art to which the present disclosure pertains that various changes and modifications may be made therein without departing from the spirit and scope of the present disclosure. Such changes and modifications belong to the claims of the present disclosure.

## Claims

1. High-purity molybdenum dichloride dioxide, comprising:
silicon (Si) in a content of equal to or less than 400 wt ppm among impurities.

2. The high-purity molybdenum dichloride dioxide of claim 1, wherein the impurities contain the silicon (Si) in a content equal to or greater than 99 wt%.

3. The high-purity molybdenum dichloride dioxide of claim 1, wherein the impurities contain less than 2 weight ppm of remaining impurity components other than the silicon (Si).

4. The high-purity molybdenum dichloride dioxide of claim 1, wherein the impurities contain less than 0.1 weight ppm of remaining impurity components other than the silicon (Si).

5. The high-purity molybdenum dichloride dioxide of claim 1, wherein the impurities include silicon (Si), silver (Ag), aluminum (Al), arsenic (As), gold (Au), barium (Ba), calcium (Ca), cadmium (Cd), cobalt (Co), chromium (Cr), copper (Cu), iron (Fe), potassium (K), lithium (Li), magnesium (Mg), manganese (Mn), sodium (Na), nickel (Ni), lead (Pb), antimony (Sb), tin (Sn), titanium (Ti), vanadium (V), tungsten (W), zinc (Zn), and zirconium (Zr).

6. The high-purity molybdenum dichloride dioxide of claim 1, wherein the molybdenum dichloride dioxide contains hydrate in a content of less than 1.5 wt%.

7. The high-purity molybdenum dichloride dioxide of claim 1, wherein the molybdenum dichloride dioxide contains hydrate in a content of less than 1 wt%.

8. A preparation method for high-purity molybdenum dichloride dioxide, comprising:
subjecting molybdenum dichloride dioxide to a sublimation purification process.
